# EUROPEAN PATENT APPLICATION

(11) **EP 2 230 597 A1**
(43) Date of publication of application: **22.09.2010**
(21) Application number: 10156612.3
(22) Date of filing: 16.03.2010
(51) Int. Cl.: G06F 9/445, G06F 9/44, H04L 29/08

(54) **Thin client server system and method of managing a driver of a USB device**

(30) Priority: 18.03.2009 JP 2009065587
(71) Applicant: NEC Corporation, Minato-ku Tokyo 108-8001 (JP); NEC System Technologies, Ltd., Osaka-shi, Osaka (JP)
(72) Inventor: Kugimoto, Nobuyuki, OSAKA (JP); Futamura, Kazuhiro, TOKYO 108-8001 (JP)
(74) Representative: Ilgart, Jean-Christophe

(57) **Abstract**

Provided is a more secure thin client server system by suppressing increase of the number of sessions established between a thin client and a server when the server controls a USB device connected to a USB bus of the thin client. When a thin client OS detects that a USB device (D) which is one of a plurality of predetermined USB devices is connected, a USB general-purpose device driver that supports all of the plurality of predetermined USB devices is loaded, and a type of the USB device (D) is notified from the thin client to the server via a session used when the screen information or the like is transmitted between the thin client and the server. The server loads a device driver of the USB device (D), assuming that the USB device (D) is connected to a USB virtual bus driver working as a virtual USB bus.

## Description

This application is based upon and claims the benefit of priority from Japanese patent application No. 2009-065587, filed on March 18, 2009, the disclosure of which is incorporated herein in its entirety by reference.

### BACKGROUND OF THE INVENTION

### 1. Field of the Invention

This invention relates to a client server system, and particularly, to use of a USB device connected to a universal serial bus (USB) port of a thin client.

### 2. Description of the Related Art

In a thin client system including a thin client and a server, it is supposed that a USB device is connected to the thin client, and the server uses the USB device.

In this case, according to a general conventional technology, a device driver for the device is prepared on the thin client, and application software which recognizes and controls the device as a device connected to the thin client is prepared in the server.

According to this conventional technology, it is necessary that device drivers of all USB devices that may be connected to the thin client should be prepared in the thin client. However, a thin client usually has a strict memory condition, and hence the number of available device drivers is restricted. As a result, types of USB devices that may be connected to the thin client are restricted.

In addition, according to such the conventional technology, the USB device connected to the thin client is not recognized by the server as a device that is physically connected but as a remote-connected device. Therefore, general application software that is executed on the server may not perform a process on the USB device connected to the thin client. In order to perform such process, it is necessary to use special application software having a function of recognizing the USB device as a device on the thin client.

Japanese Unexamined Patent Application Publication (JP-A) No. 2007-102308 (Patent Document 1) discloses a thin client server system that does not require installing device drivers in a thin client. In this system, the server includes a device control data transfer portion 14 (reference numeral is what is used in Patent Document 1, and the same is true for the following description concerning Patent Document 1), and the client includes a device control data transfer control portion 22. Thus, transfer session of screen information is established between a control portion 12 of the server and a thin client control portion 21 of the client, while another session for direct communication between the device control data transfer portion 14 and the device control data transfer control portion 22 is established. Through the another session, the server obtains information about a USB device connected to the client, and the server activates the corresponding device driver based on the information. Through the another session, the device driver controls the USB device connected to the client.

According to this conventional technology, it is necessary to establish a session for controlling the USB device between the thin client and the server, in addition to the session for transferring screen information generated in the server. In general, as the number of established sessions increases, the number of ports that are opened in both of the thin client and the server increases. The increase of the number of ports that are opened is not preferred from a viewpoint of security.

### SUMMARY OF THE INVENTION

This invention has been made in view of the above, and provides a more secure thin client server system in which a server generates screen information to be displayed on a thin client, by suppressing increase of the number of sessions established between the thin client and the server when the server controls a USB device connected to a USB bus of the thin client.

According to an aspect of this invention, there is provided a thin client server system, including: a server; and a thin client, the server generating screen information to be displayed on the thin client, the screen information being transferred from the server to the thin client via a session S established between a remote connection thin client program working on the thin client and a remote connection server program working on the server, in which: the thin client includes: a USB general-purpose device driver that is a device driver that supports a plurality of predetermined USB devices; and a service on the thin client side that notifies, when a thin client OS detects that a USB device D which is one of the plurality of predetermined USB devices is connected to the thin client, the server about a type of the USB device D via the session S; the server includes: a USB virtual bus driver that is a program working as a virtual USB bus on the server; and a service on the server side for notifying from the USB virtual bus driver to a server OS about the type of the USB device D in response to the notification from the service on the thin client side; and the server OS loads a USB device driver corresponding to the type of the USB device D notified from the USB virtual bus driver.

Further, according to another aspect of this invention, there is provided a method of managing a driver of a USB device connected to a thin client in a thin client server system in which a server generates screen information to be displayed on the thin client, and the screen information is transferred from the server to the thin client via a session S established between a remote connection thin client program working on the thin client and a remote connection server program working on the server. The method of managing a driver of a USB device includes: loading, when a thin client OS detects that a USB device D which is one of a plurality of predetermined USB devices is connected to the thin client, a USB general-purpose device driver that supports all of the plurality of predetermined USB devices; sending notification of a type of the USB device D from a service on the thin client side to a service on the server side via the session S; sending notification of the type of the USB device D from the service on the server side to a USB virtual bus driver that is a program working on the server as a virtual USB bus, in response to the notification from the service on the thin client side; sending notification of the type of the USB device D from the USB virtual bus driver to a server OS; and loading, by the server OS, a USB device driver corresponding to the type of the USB device D notified from the USB virtual bus driver.

### BRIEF DESCRIPTION OF THE DRAWINGS

The above features and advantages of the present invention will be more apparent from the following description of certain exemplary embodiments in conjunction with the accompanying drawings, in which:
FIG 1 is a block diagram of a thin client system that is an embodiment of this invention;
FIG. 2 is a block diagram of a thin client and a server in the thin client system;
FIG. 3 is a flowchart for describing an operation of the thin client system when a USB device is connected to the thin client;
Fig. 4 is a flowchart for describing an operation of the thin client system when the USB device is removed from the thin client; and
FIG. 5 is a flowchart for describing an operation of the thin client system when an application program working on a server OS controls the USB device connected to the thin client.

### DETAILED DESCRIPTION OF THE EXEMPLARY EMBODIMENTS

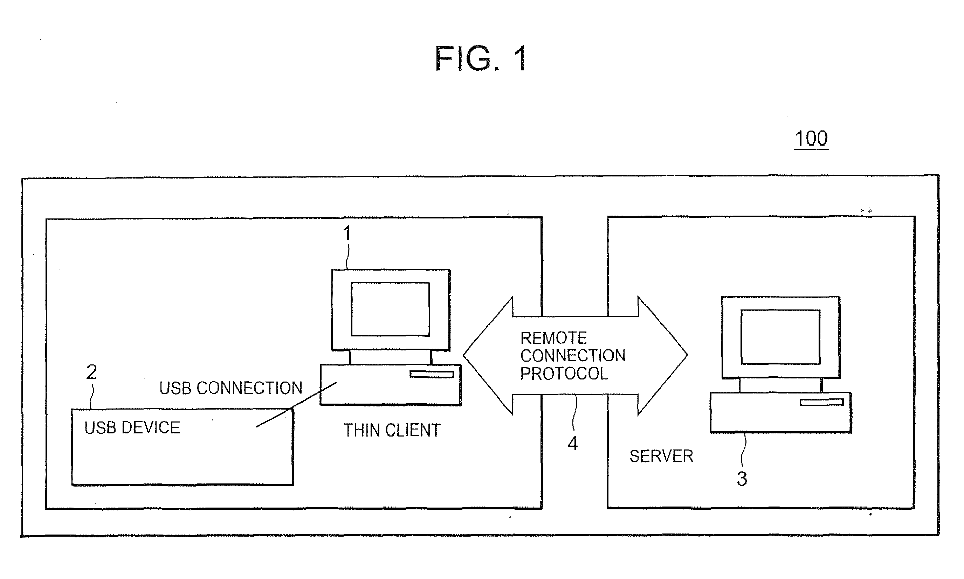

A thin client system 100 that is an embodiment of this invention is described. Referring to FIG. 1, the thin client system 100 includes a thin client 1, a USB device 2 that is connected to a USB port of the thin client 1, and a server 3 that is connected to the thin client 1 via a network. The thin client 1 is an information processing device to which a USB device may be connected, and has a communication unit for communication with the server 3. As a good example of the thin client 1, there is a mobile information processing device or a mobile communication terminal having a communication unit such as a mobile phone. A remote connection protocol 4 is a protocol that is used when input information from a keyboard or the like of the thin client 1 is transferred to the server 3 or when screen information generated in the server 3 is transferred to the thin client 1. Between the thin client 1 and the server 3, there is established a session for transferring the above-mentioned input information and screen information. Hereinafter, this session is called an input-output session.

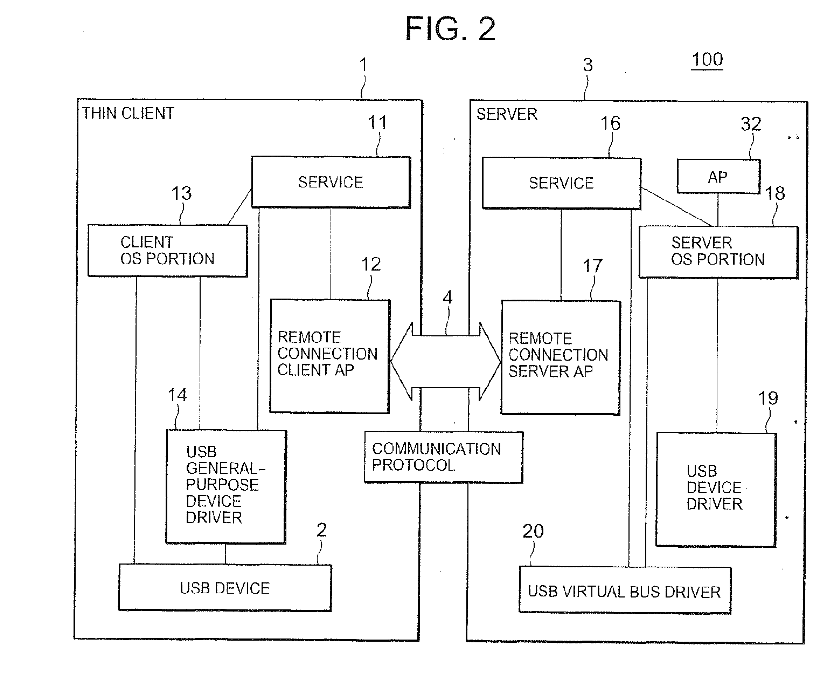

With reference to FIG. 2, further detailed description is given as follows. The thin client 1 includes a USB device 2 that is connected via a USB port (not shown), a service 11, a remote connection client AP (application) 12, a client OS portion 13, and a USB general-purpose device driver 14. The server 3 includes a service 16, a remote connection server AP (application) 17, a server OS portion 18, a USB device driver 19, and a USB virtual bus driver 20.

The service 11 is a service program for controlling programs executed in the thin client 1 so that the server 3 may use the USB device 2 connected to the thin client 1. The service 11 obtains information about the USB device 2 from the client OS portion 13 and sends the information to the service 16 via the input-output session. In addition, the service 11 receives control information and input-output information of the USB device 2 from the server via the input-output session, so as to perform control and input-output of the USB device 2 via the USB general-purpose device driver 14.

The remote connection client AP 12 is a program for performing a communication process with the remote connection server AP 17 by the remote connection protocol 4. The session that is used in the communication process is the input-output session.

The client OS portion 13 is an operating system working on the thin client 1. The type of the USB device for which the USB general-purpose device driver 14 should be loaded when the USB device is connected to the USB port is enrolled in advance in the client OS portion 13.

The USB general-purpose device driver 14 is called from the client OS portion 13 and is loaded when any one of the USB devices of predetermined types is connected to the USB bus of the thin client 1.

The USB general-purpose device driver 14 is a device driver for controlling the USB device 2 connected to the USB port. The USB general-purpose device driver 14 is loaded when any one of the one or more USB devices enrolled in advance in the client OS portion 13 is connected to the thin client 1. The type of the USB device that may be a target of the USB general-purpose device driver 14 is not limited to a specific USB device, but should be a device that support USB connection, for example, various external storage devices such as a hard disk drive, a CD-ROM drive, a silicon disk drive, various input devices such as a keyboard, a mouse, a tablet, a digital camera, a scanner, various display devices such as a liquid crystal display device, a printer, and the like.

The USB device 2 is a device that supports USB connection and is connected to the USB port of the thin client 1. The USB device 2 is a USB device of the type that is enrolled in advance in the client OS portion 13 as a target of the USB general-purpose device driver 14.

The service 16 is a service program for controlling the programs executed on the server 3 so that the server 3 may use the USB device 2 connected to the thin client 1. The service 16 notifies the type of the USB device to the USB virtual bus driver 20 in accordance with connection of a predetermined USB device that is notified from the service 11 via the remote connection server AP 17.

The remote connection server AP 17 is a program for performing a communication process with the remote connection client AP 12 in accordance with the remote connection protocol 4. The session used for this communication process is the input-output session.

The server OS portion 18 is an operating system working on the server 3 and recognized the USB device 2 via the USB device driver 19 corresponding to the type of the USB device 2.

The USB device driver 19 is a device driver for the USB device enrolled as a target of the USB general-purpose device driver 14 in the client OS portion 13.

The USB virtual bus driver 20 is a driver that acts as if being a USB bus of the server 3 itself viewed from the server OS portion 18.

Note that each of the service 11, the remote connection client AP 12, and the USB general-purpose device driver 14 is a program working on the client OS 13. Similarly, each of the service 16, the remote connection server AP 17, and the USB device driver 19 is a program working on the server OS 18.

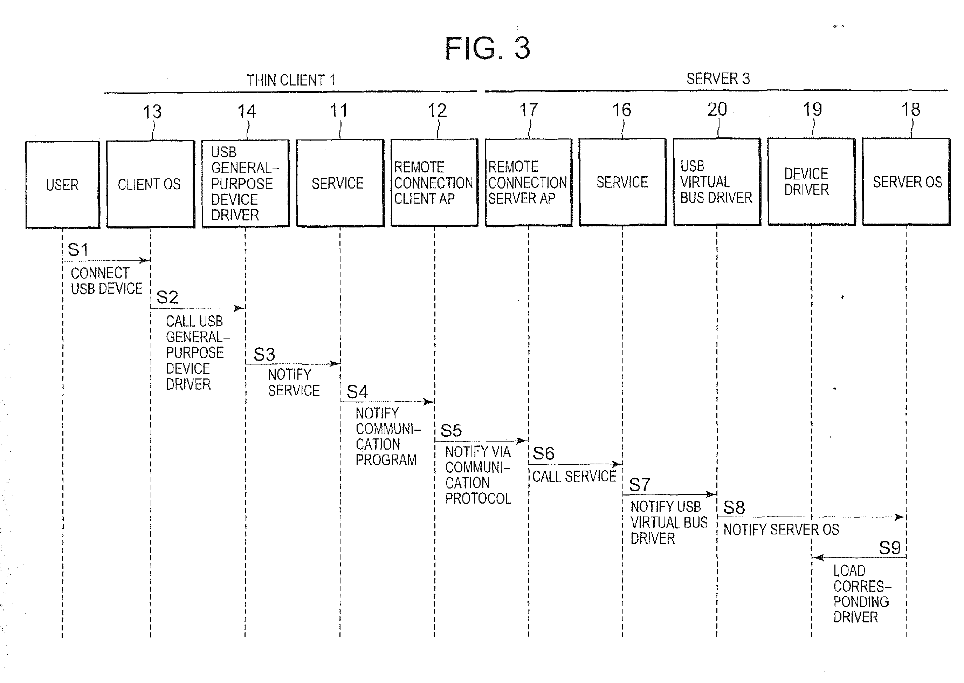

Next, an operation in the thin client system 100 when connecting the USB device 2 to the thin client 1 is described with reference to FIG. 3.

When a user of the thin client 1 connects the USB device 2 to the USB port (Step S1), the client OS portion 13 identifies a type of the USB device in response to detection of the connection and selects a device driver to be loaded in response to a result of the identification. Here, if a pre-enrolled USB device is identified as a target of the USB general-purpose device driver 14, the client OS portion 13 calls the USB general-purpose device driver 14 (Step S2). The USB general-purpose device driver 14 notifies the service 11 of the USB device 2 being connected and of the type of the USB device 2 (Step S3). The service 11 notifies the remote connection server AP 17 of the server 3 about the connection of the USB device 2 and the type thereof via the remote connection client AP 12 (Steps S4 and S5).

When receiving notification of the connection of the USB device 2 from the thin client 1, the remote connection server AP 17 calls the service 16 (Step S6). The service 16 notifies the USB virtual bus driver 20 about the connection of the USB device to the thin client 1 and the type thereof (Step S7). The USB virtual bus driver 20 regards that the USB device of the type that is notified from the thin client 1 is connected to the virtually established USB bus and notifies the connection of the USB device and the type of the USB device to the server OS portion 18 (Step S8). The server OS portion 18 detects that the USB device 2 is connected to the virtual USB bus established by the USB virtual bus driver 20 and loads the device driver corresponding to the notified type of the USB device as the device driver 19 of the USB device 2 (Step S9).

Thus, when viewed from the server OS portion 18, the USB device 2 on the thin client 1 is recognized as if being directly connected to the USB port of the server 3 itself. Other application programs activated on the server OS portion 18 detect the USB device 2 connected to the thin client 1 in the same manner as the device that is directly connected to the USB port of the server 3 itself via the USB virtual bus driver 20 when searching devices on the server 3.

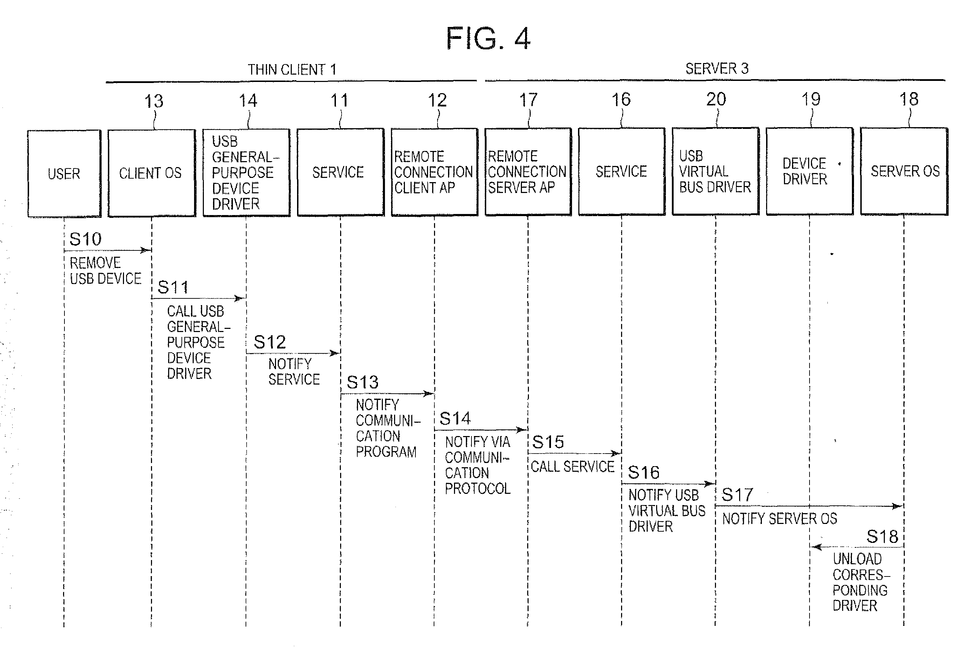

Next, with reference to FIG. 4, an operation of the thin client system 100 when removing the USB device 2 from the thin client 1 is described. When the client OS portion 13 recognizes that a user of the thin client 1 has removed the USB device 2 from the thin client 1 (Step S10), the client OS portion 13 notifies the USB general-purpose device driver 14 that the device has been removed (Step S11). Receiving this, the USB general-purpose device driver 14 notifies the service 11 (Step S12), and the service 11 notifies the remote connection server AP 17 (Step S14) via the remote connection client AP 12 (Step S13). In response to this notification, the remote connection server AP 17 calls the service 16 (Step S15), and the service 16 notifies the USB virtual bus driver 20 that the device has been removed (Step S16). The USB virtual bus driver 20 notifies the server OS portion 18 that the USB device 2 has been removed (Step S 17). According to this notification, the server OS portion 18 unloads the device driver 19 (Step S18).

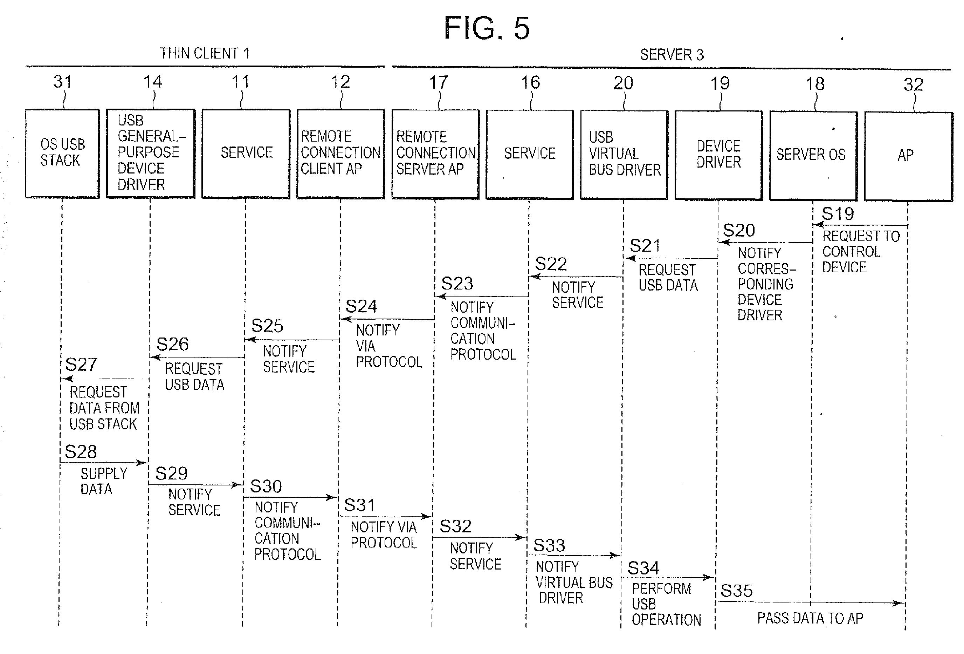

Next, with reference to FIG. 5, an operation is described when AP (application) 32 which is an arbitrary application program working on the server OS portion 18 controls the USB device 2 connected to the thin client 1.

When the AP 32 requests the server OS portion 18 to control the USB device 2 in the same manner as the case of controlling the USB device that is directly connected to the server 3 (Step S19), the server OS portion 18 issues the request to the device driver 19 that is a driver corresponding to the USB device 2 (Step S20). The device driver 19 requests USB data from the USB virtual bus driver 20 (Step S21). The USB virtual bus driver 20 notifies the request to the service 16 (Step S22). The service 16 notifies the remote connection server AP 17 (Step S23). The remote connection server AP 17 notifies the request to the remote connection client AP 12 via the remote connection protocol 4 (Step S24). The remote connection client AP 12 notifies the request to the service 11 (Step S25), and the service 11 requests USB data from the USB general-purpose device driver 14 (Step S26). The USB general-purpose device driver 14 requests USB data from a USB stack 31 of the client OS portion 13 (Step S27). The USB stack 31 returns the data obtained from the USB device 2 to the USB general-purpose device driver 14 (Step S28). The USB general-purpose device driver 14 notifies the service 11 (Step S29), and the service 11 notifies the remote connection client AP 12 (Step S30). The remote connection client AP 12 notifies the remote connection server AP 17 via the remote connection protocol 4 (Step S31), and the remote connection server AP 17 notifies the service 16 (Step S32). The service 16 notifies the USB virtual bus driver 20 (Step S33), and the USB virtual bus driver 20 passes the USB data to the device driver 19 (Step S34). The device driver 19 passes the request data to the AP 32 via the server OS portion 18 (Step S35).

In accordance with the embodiment, for notification to the server about a type of the USB device connected to the thin client, which type is necessary to load the device driver in the server, the session A, that is, a session used for transferring the screen information generated by the server to the thin client, is used. Therefore, when notification about a type of the USB device connected to the thin client is sent to the server, it is not necessary to establish another session, and hence a more secure thin client server system may be provided.

In addition, according to the embodiment, a control that is inherent in the USB device connected to the thin client is performed by the driver on the server side. Therefore, it is not necessary to install a device-specific driver in the thin client.

In addition, a USB virtual bus is created on the server side so as to operate together with the server OS. Therefore, it is observed from the server OS as if the device is directly connected to the server OS. Therefore, the application software working on the server may control the device in the same manner as the device that is directly connected to the server OS without recognizing a remote connection. In addition, it is not necessary to modify existing application software for realizing this.

In addition, because this invention works together with a device adding or removing function of the OS, a dynamic insertion and extraction may be permitted.

As described above, this invention is described with reference to the embodiment, but this invention is not limited to this embodiment. As a matter of course, it may be modified freely within the technical scope of this invention. For instance, the thin client system 100 is described assuming that the server 3 is a physical server, but the server 3 may be a virtual server established on a physical server.

The whole or part of the exemplary embodiment disclosed above can be described as, but not limited to, the following supplementary note.

(Supplementary note1) A thin client server system, comprising: a thin client; and a server adapted to generate screen information to be displayed on the thin client, the screen information being transferred from the server to the thin client via a session S established between a remote connection thin client program working on the thin client and a remote connection server program working on the server, wherein: the thin client comprises: a USB general-purpose device driver that is a device driver that supports a plurality of predetermined USB devices; and a service on the thin client side that notifies, when a thin client OS detects that a USB device D which is one of the plurality of predetermined USB devices is connected to the thin client, the server about a type of the USB device D via the session S; the server comprises: a USB virtual bus driver that is a program working as a virtual USB bus on the server; a service on the server side adapted to notify the USB virtual bus driver about the type of the USB device D in response to the notification from the service on the thin client side; and a server OS wherein the server OS loads a USB device driver corresponding to the type of the USB device D notified from the USB virtual bus driver.

(Supplementary note 2) A thin client server system according to supplementary note 1, wherein when the thin client OS detects removal of the USB device D, the server OS is notified about the removal via the session S, and the server OS unloads the USB device driver of the USB device D in response to the notification.

(Supplementary note 3) A thin client server system according to supplementary note 1, wherein the server further comprises a program working on the server OS that obtains data from the USB device D via the USB virtual bus driver and the session S.

(Supplementary note 4) A thin client server system according to any one of Supplementary notes1 to 3, wherein the thin client comprises a mobile communication terminal.

(Supplementary note 5) A method of managing a driver of a USB device connected to a thin client in a thin client server system in which a server generates screen information to be displayed on the thin client, and the screen information is transferred from the server to the thin client via a session S established between a remote connection thin client program working on the thin client and a remote connection server program working on the server, the method comprising: loading, when a thin client OS detects that a USB device D which is one of a plurality of predetermined USB devices is connected to the thin client, a USB general-purpose device driver that supports all of the plurality of predetermined USB devices; sending notification of a type of the USB device D from a service on the thin client side to a service on the server side via the session S; sending notification of the type of the USB device D from the service on the server side to a USB virtual bus driver that is a program working on the server as a virtual USB bus, in response to the notification from the service on the thin client side; sending notification of the type of the USB device D from the USB virtual bus driver to a server OS; and loading, by the server OS, a USB device driver corresponding to the type of the USB device D notified from the USB virtual bus driver.

(Supplementary note 6) A method of managing a driver of a USB device according to Supplementary note 5, further comprising:
sending notification, when the thin client OS detects removal of the USB device D, of the removal to the server OS via the session S; and unloading, by the server OS, the USB device driver of the USB device D in response to the notification.

(Supplementary note 7) A method of managing a driver of a USB device according to Supplementary note 5, further comprising obtaining, by a program working on the server OS, data from the USB device D via the USB virtual bus driver and the session S.

(Supplementary note 8) A method of managing a driver of a USB device according to any one of Supplementary notes 5 to 7, wherein the thin client comprises a mobile communication terminal.

(Supplementary note 9) A server for use in a thin client server system in which the server generates screen information to be displayed on a thin client, and the screen information is transferred from the server to the thin client via a session S established between a remote connection thin client program working on the thin client and a remote connection server program working on the server,
the server comprising: a USB virtual bus driver that is a program working as a virtual USB bus on the server; a service on the server side adapted to notify the USB virtual bus driver about a type of a USB device D via the session S in response to a notification, from a service on the thin client side, that a thin client OS detects that the USB device D which is one of a plurality of predetermined USB devices supported by a USB general-purpose device driver is connected to the thin client; and a server OS, wherein the server OS loads a USB device driver corresponding to the type of the USB device D notified from the USB virtual bus driver.

(Supplementary note 10) A thin client for use in a thin client server system in which a server generates screen information to be displayed on the thin client, the screen information is transferred from the server to the thin client via a session S established between a remote connection thin client program working on the thin client and a remote connection server program working on the server, the server comprises a USB virtual bus driver that is a program working as a virtual USB bus on the server, a service on the server side for notifying the USB virtual bus driver about the type of the USB device D that is the one of a plurality of predetermined USB devices in response to the notification from the service on the thin client side, and a server OS adapted to load a USB device driver corresponding to the type of the USB device D notified by the USB virtual bus driver, the thin client comprising: a USB general-purpose device driver that is a device driver that supports a plurality of predetermined USB devices; and a service on the thin client side for notifying, when a thin client OS detects that a USB device D that is one of a plurality of predetermined USB devices is connected to the thin client, the server about a type of the USB device D via the session S.

(Supplementary note 11) A computer-readable medium comprising software instructions that, when executed in a thin client server system in which the server generates screen information to be displayed on a thin client, and the screen information is transferred from the server to the thin client via a session S established between a remote connection thin client program working on the thin client and a remote connection server program working on the server,, cause the implementation of:: loading, when a thin client OS detects that a USB device D which is one of a plurality of predetermined USB devices is connected to the thin client, a USB general-purpose device driver that supports all of the plurality of predetermined USB devices; sending notification of a type of the USB device D from a service on the thin client side to a service on the server side via the session S; sending notification of the type of the USB device D from the service on the server side to a USB virtual bus driver that is a program working on the server as a virtual USB bus, in response to the notification from the service on the thin client side; sending notification of the type of the USB device D from the USB virtual bus driver to a server OS; and loading, by the server OS, a USB device driver corresponding to the type of the USB device D notified from the USB virtual bus driver.

(Supplementary note 12) A computer-readable medium comprising software instructions that, when executed in a server in a thin client server system in which the server generates screen information to be displayed on a thin client, and the screen information is transferred from the server to the thin client via a session S established between a remote connection thin client program working on the thin client and a remote connection server program working on the server, cause the implementation of: loading, when a thin client OS detects that a USB device D which is one of a plurality of predetermined USB devices is connected to the thin client, a USB general-purpose device driver that supports all of the plurality of predetermined USB devices; sending notification of a type of the USB device D from a service on the thin client side to a service on the server side via the session S; notifying a type of a USB device D from a service on a server side to a USB virtual bus driver that is a program working on the server as a virtual USB bus in response to a notification, from a service on the thin client side, that a thin client OS detects that the USB device D which is one of a plurality of predetermined USB devices supported by a USB general-purpose device driver is connected to the thin client; notifying the type of the USB device D from the USB virtual bus driver to a server OS; and loading, by the server OS, a USB device driver corresponding to the type of the USB device D notified from the USB virtual bus driver.

## Claims

1. A thin client server system, comprising:
a thin client; and
a server adapted to generate screen information to be displayed on the thin client, the screen information being transferred from the server to the thin client via a session S established between a remote connection thin client program working on the thin client and a remote connection server program working on the server, wherein:
the thin client comprises:
a USB general-purpose device driver that is a device driver that supports a plurality of predetermined USB devices; and
a service on the thin client side that notifies, when a thin client OS detects that a USB device D which is one of the plurality of predetermined USB devices is connected to the thin client, the server about a type of the USB device D via the session S;
the server comprises:
a USB virtual bus driver that is a program working as a virtual USB bus on the server;
a service on the server side adapted to notify the USB virtual bus driver about the type of the USB device D in response to the notification from the service on the thin client side; and
a server OS; and
the server OS loads a USB device driver corresponding to the type of the USB device D notified from the USB virtual bus driver.

2. A thin client server system according to claim 1, wherein when the thin client OS detects removal of the USB device D, the server OS is notified about the removal via the session S, and the server OS unloads the USB device driver of the USB device D in response to the notification.

3. A thin client server system according to claim 1, wherein the server further comprises a program working on the server OS that obtains data from the USB device D via the USB virtual bus driver and the session S.

4. A thin client server system according to any one of claims 1 to 3, wherein the thin client comprises a mobile communication terminal.

5. A method of managing a driver of a USB device connected to a thin client in a thin client server system in which a server generates screen information to be displayed on the thin client, and the screen information is transferred from the server to the thin client via a session S established between a remote connection thin client program working on the thin client and a remote connection server program working on the server, the method comprising:
loading, when a thin client OS detects that a USB device D which is one of a plurality of predetermined USB devices is connected to the thin client, a USB general-purpose device driver that supports all of the plurality of predetermined USB devices;
sending notification of a type of the USB device D from a service on the thin client side to a service on the server side via the session S;
sending notification of the type of the USB device D from the service on the server side to a USB virtual bus driver that is a program working on the server as a virtual USB bus, in response to the notification from the service on the thin client side;
sending notification of the type of the USB device D from the USB virtual bus driver to a server OS; and
loading, by the server OS, a USB device driver corresponding to the type of the USB device D notified from the USB virtual bus driver.

6. A method of managing a driver of a USB device according to claim 5, further comprising:
sending notification, when the thin client OS detects removal of the USB device D, of the removal to the server OS via the session S; and
unloading, by the server OS, the USB device driver of the USB device D in response to the notification.

7. A method of managing a driver of a USB device according to claim 5, further comprising obtaining, by a program working on the server OS, data from the USB device D via the USB virtual bus driver and the session S.

8. A method of managing a driver of a USB device according to any one of claims 5 to 7, wherein the thin client comprises a mobile communication terminal.

9. A server for use in a thin client server system in which the server generates screen information to be displayed on a thin client, and the screen information is transferred from the server to the thin client via a session S established between a remote connection thin client program working on the thin client and a remote connection server program working on the server,
the server comprising:
a USB virtual bus driver that is a program working as a virtual USB bus on the server;
a service on the server side adapted to notify the USB virtual bus driver about a type of a USB device D via the session S in response to a notification, from a service on the thin client side, that a thin client OS detects that the USB device D which is one of a plurality of predetermined USB devices supported by a USB general-purpose device driver is connected to the thin client; and
a server OS,
wherein the server OS loads a USB device driver corresponding to the type of the USB device D notified from the USB virtual bus driver.

10. A thin client for use in a thin client server system in which a server generates screen information to be displayed on the thin client, the screen information is transferred from the server to the thin client via a session S established between a remote connection thin client program working on the thin client and a remote connection server program working on the server, the server comprises a USB virtual bus driver that is a program working as a virtual USB bus on the server, a service on the server side for notifying the USB virtual bus driver about the type of the USB device D that is the one of a plurality of predetermined USB devices in response to the notification from the service on the thin client side, and a server OS adapted to load a USB device driver corresponding to the type of the USB device D notified by the USB virtual bus driver,
the thin client comprising:
a USB general-purpose device driver that is a device driver that supports a plurality of predetermined USB devices; and
a service on the thin client side for notifying, when a thin client OS detects that a USB device D that is one of a plurality of predetermined USB devices is connected to the thin client, the server about a type of the USB device D via the session S.
